# EUROPÄISCHE PATENTSCHRIFT

(11) **EP 2 252 180 B1**
(45) Veröffentlichungstag und Bekanntmachung des Hinweises auf die Patenterteilung: **20.03.2013**
(21) Anmeldenummer: 08761182.8
(22) Anmeldetag: 18.06.2008
(51) Int. Cl.: A47G 9/02, A47C 27/00, B32B 27/12, B32B 5/08, B32B 7/14, D03D 15/00

(54) **TEXTILES FLÄCHENGEBILDE FÜR BETTSYSTEME**
TEXTILE FABRIC FOR BED SYSTEMS
STRUCTURE TEXTILE DESTINÉE À DES SYSTÈMES DE LITERIE

(30) Priorität: 26.10.2007 DE 102007051324; 11.01.2008 DE 102008003963
(43) Veröffentlichungstag der Anmeldung: 24.11.2010
(73) Patentinhaber: Gerlinger Industries AG, 9434 Au (CH)
(72) Erfinder: ENGELKING, Svenn, 58708 Menden (DE); THILL, Ulrike, 58239 Schwerte (DE); SCHULTE, Ulrich, 50996 Köln (DE)
(74) Vertreter: Ganahl, Bernhard
(86) Internationale Anmeldenummer: PCT/EP2008/057734
(87) Internationale Veröffentlichungsnummer: WO 2009/053120

(56) Entgegenhaltungen:
- DE-A1- 4 027 798
- DE-U1- 20 101 149
- DE-U1- 20 102 560
- US-A1- 2004 040 087

## Beschreibung

Die Erfindung betrifft ein textiles Flächengebilde für Bettsysteme, wie Schutzbezüge, Kissen, Oberbetten oder Matratzen.

Zweck der Erfindung ist, mit Milben- und allergendichten Schutsbezügen, die in Kissen, Oberbetten oder Matratzen lebenden Milben abzusperren und dadurch zu verhindern, dass die Milben und/oder Milbenallergene nach außen gelangen. Dabei soll das Milben- und Allergenrückhaltevermögen garantiert sein, kein Luftaustausch (Luftdichtigkeit), dagegen ein ausreichender Feuchtigkeitsaustausch stattfinden und der Liege- und Schlafkomfort nicht beeinträchtigt sein. Zudem sollen die Schutzbezüge wasserdicht, frei von Schadstoffen und waschbar sein. Außerdem sollen keine Sekrete und damit Viren oder Bakterien in die Kissen oder Decken gelangen können.

Eine weitere Forderung in diesem Zusammenhang ist, statische Elektrizität, die durch reibende Bewegungen im Bett durch eine im Bett liegende Person erzeugt werden kann (Body Voltage), zu neutralisieren, weil diese elektrische Aufladung Milbenallergene aus, dem Innern eines Kissens, eines Oberbetts oder einer Matratze anziehen kann.

Aus dem deutschen Gebrauchsmuster DE 201 01 149 U1 ist ein gewebter oder gestrickter Matratzenbezugsstoff bekannt, in dem auf bestimmten Abständen von nicht mehr als 2 cm voneinander angeordnete, elektrisch leitende Garne eingearbeitet, z. B. eingestreckt oder eingewebt sind, die z. B. einen elektrisch leitenden Kern aufweisen, der von einer elektrisch isolierenden Außenschicht umgeben ist. Die Verwendung elektrisch leitender Garne soll durch elektrische Felder verursachten Schlafstörungen durch Vermeidung elektrischer Aufladungen entgegenwirken, denn elektrostatische Aufladung kann zu schlechtem Schlaf führen. Die Wirksamkeit dieser textilen Stoffe ist jedoch nicht befriedigend, weil die elektrische Ableitung nicht optimal ist.

Zudem soll eine derartige Textilie durch Neutralisation elektrischer Aufladungen bewirken, dass keine Milbenallergene oder dergleichen Partikel anziehende, elektrostatische Kräfte entstehen..

Diese bekannten textilen Stoffe sind nicht luftdicht und wasserdicht und weisen meist schlechte physiologische Eigenschaften bezüglich Feuchtigkeitstransport und Thermoregulation auf und sind deshalb insofern, nur bedingt verwendbar. Außerdem ist die Neutralisierung der elektrischen Aufladung auch nicht ausreichend, um zu verhindern, dass die Allergene - angezogen durch elektrostatische Kräfte - aus einer Matratze, einem Kissen oder einem Oberbett nach außen dringen.

Des Weiteren ist eine Abschirmdecke gegen elektromagnetische und sonstige Strahlungen bekannt, die den Benutzer auch gegen allergene Bestandteile szhützen soll (DE 201 02 560 U1). Diese Abschirmdecke gegen elektromagnetische und sonstige Strahlungen, insbesondere für Sitz- und Liegebereiche, weist eine elektrisch leitendes Material enthaltende Abschirmlage mit einer Decklage aus nicht leitendem textilen Material kombiniert auf, wobei die Abschirmlage in zumindest einer Textillage vorwiegend aus feinem und dicht verteiltem metallisiertem oder elektrisch leitendem Fasermaterial besteht, die zwischen zumindest zwei Decklagen aus einem staubdichten Tuch eingeschlossen ist. Der Schutz gegen allergene Bestandteile soll durch die Dichtigkeit des Tuchs gewährleistet werden.

Des Weiteren sind aus der DE 40 27 798 A1 Materialien bekannt, bestehend aus einem geschlossenen, also nicht porösen Film aus wasserdampfdurchlässigem Polyurethan, der durch eine textile Komponente verstärkt ist, die sich zur Herstellung von Matratzenhüllen eignen sollen. Die Materialien sollen vorhandenen Milbenkot zurückhalten und zum Absterben der Milben führen, weil den Milben die Nahrung (Hautschuppen) entzogen wird. Zum Beispiel wird dabei ein Polyestergewirke mit Impraperm, einem Beschichtungsmaterial der BASF, beschichtet und zwei Bahnen mit der beschichteten Seite thermisch zusammenkaschiert.

Aus der DE 94 02 532 U1 ist ein Überzugsmaterial für Matratzen, Kissen und Federbetten bekannt, das Beeinträchtigungen durch Milben vermeiden helfen soll. Das Material weist eine kompakte luftundurchlässige, wasserdampfdurchlässige Polyurethanschicht auf, die mit einem verstärkenden textilen Flächengebilde flächig und fest verbunden ist.

Ein elektrostatisch ableitfähiges Material soll nach DIN EN 1149-5, 2005 mindestens eine der folgenden Anforderungen erfüllen: t₅₀ < 4 s oder S > 0,2 geprüft nach EN 1149-3.

Aufgabe der Erfindung ist, ein insbesondere für Schutzbezüge für insbesondere Kissen, Oberbetten oder Matratzen geeignetes textiles Flächengebilde zu schaffen, das luftundurchlässig und wasserdampfdurchlässig und Milbenallergen sperrend ist und durch elektrostatische Aufladungen sowie elektromagnetische Strahlungen bewirkte Schlafstörungen effektiver vermeiden hilft, wobei Schlaf- und Liegekomfort nicht beeinträchtigt sein sollen.

Diese Aufgabe wird durch die Merkmale des Anspruchs 1 gelöst. Vorteilhafte Weiterbildungen der Erfindung werden in den Unteransprüchen gekenntzeichnet.

Die Erfindung beinhaltet ein waschbares textiles Flächengebilde aus einer flächigen, z. B. in Kett- und/oder Schussrichtung verlaufende, elektrisch leitfähige Garne aufweisenden Textilie, kombiniert mit einer wasserdampfdurchlässigen luftdichten, geschmeidigen bzw. flexiblen Membranfolie, wobei diese Kombination punktuell über Klebstoffpunkte gewährleistet ist.

Als flächige Textilie wird z. B. ein Gewebe, Gewirke, z. B. Gewirke mit Schusseintrag, Gestrick, Vliesstoff oder dergleichen mit Flächengewichten von 10 bis 500, insbesondere von 30 bis 100 g/m² verwendet. Die Textilie besteht vorzugsweise aus Polyamidfilamertgarnen, Polyesterfilamentgarnen oder Baumwolle bzw. Polyesterfasern oder Polyamidfasern oder Mischungen daraus beim Vliesstoff. Die Feinheiten der Garne liegen zweckmäßigerweise zwischen 11 und 1100 dtex. Verwendbar sind aber auch Kevlar-, Aramid-, Glas- oder dergleichen Hochleistungsfasern oder -filamente sowie Mischungen dieser Produkte.

Vorzugsweise wird ein Gewebe oder Kettengewirke mit Schusseintrag oder Vlies als flächige Textilie verwendet.

Als elektrisch leitfähige sich kreuzende Garne werden insbesondere Filamentgarne mit Feinheiten zwischen 11 und 1100 dtex verwendet, die vorzugsweise in die flächige Textilie eingebracht, z. B. eingewebt sind. Vorzugsweise wird ein an sich bekanntes, sogenanntes Kern-Mantel-Garn verwendet mit Feinheiten zwischen 30 und 200 dtex aus Filamenten mit einem Kernfilament aus z. B. einem Monofil-Carbon-Filament und einer Ummantelung aus z. B. Polyester oder Polyamid. Dabei ist das elektrisch leitende, insbesondere als Kernfilament ausgebildete Kernmaterial innerhalb der Ummantelung dieser zweikomponentigen Garnfilamente eingebettet und erstreckt sich radial nicht bis an die Ummantelungsoberfläche. Zweckmäßigerweise ist das Kernfilament mindestens bilobal, insbesondere trilobal oder aber auch mehrlobal bzw. zwei-, drei-, vier-, fünf- oder sechslappig, wie in der DE 690 13 395 T2 offenbart, ausgebildet. Derartige Garne erfordern keine Erdung zur Ableitung einer elektrostatischen Aufladung. Sie entladen durch Luft-Ionisation durch den sogenannten Corona-Effekt bzw. CoronaEntladung. Für die jeweils parallel verlaufenden elektrisch leitenden Garne der sich kreuzenden Garne wird zweckmäßigerweise ein Abstand voneinander zwischen 4 und 100, insbesondere zwischen 6 und 35 mm gewählt.

Die Klebstoffpunkte bestehen aus Schmelzklebstoffen und weisen einen Durchmesser z. B. zwischen 0,15 und 10 mm und eine Verteilung von 3 bis 100, insbesondere von 6 bis 18 g/m² auf.

Die Membranfolie besteht vorzugsweise aus PTFE, PET oder PU oder Polyethersulfon- oder Polyacrylnitrid oder Celluloseacetat und weist z. B. einen Wasserdampfdurchgangswiderstand, (gemessen nach ASTM E96-2000 Variante E), von 500 bis 6000 g/m² x 24h sowie Flächengewichte zwischen 5 und 200 g/m² auf und leitet die Wasserdampfteilchen insbesondere molekular durch die Folie.

Das erfindungsgemäße textile Flächengebilde weist insbesondere einen elektrischen Abschirmfaktor S nach DIN EN 1149-3 zwischen 0,39 und 0,75 auf. Der nach DIN EN 1149-1 2006 gemessene Oberflächenwiderstand liegt vorzugsweise zwischen 5 x 10¹⁰ und 1 x 10¹² Ohm. Des Weiteren liegt der nach DIN EN 1149-5 bestimmte Halbwertzeitfaktor mit t₅₀ < 1 s überraschend niedrig.

Das erfindungsgemäße textile Flächengebilde schirmt somit nicht nur gegen elektromagnetische Strahlung ab, sondern leitet auch besonders effektiv elektrostatische Ladungen ab, so dass aus elektromagnetischen Feldern resultierende Schlafstörungen bei empfindlichen Personen und auf Allergene wirkende elektrostatische Anziehungskräfte vermieden werden können. Synergistisch wird durch die Membranfolie der Weg für Milben und Milbenallergene versperrt und gute physiologische Eigenschaften bezüglich Feuchtigkeitstransport und Thermoregulation beim Einsatz in Schlafsystemen gewährleistet. Da das erfindungsgemäße textile Flächengebilde geschmeidig bzw. flexibel ist, wird auch der Liege- und Schlafkomfort nicht beeinträchtigt.

Das erfindungsgemäße textile Flächengebilde ist häufig waschbar, insbesondere auch in industriellen Waschanlagen, ohne dass der Verbund zwischen der Membranfolie und der flächigen Textilie oder die beschriebenen besonderen Eigenschaften verloren gehen.

Anhand der folgenden Ausführungsbeispiele wird die Erfindung verdeutlicht.

### Beispiel 1

Es wird als flächige Textilie ein Gewebe folgender Konstruktion hergestellt:
Kettfaden: Filamentgarn aus 100 % Polyester texturiert, Feinheit 78 dtex f 24 x 1;
Schussfaden: Filamentgarn aus 100 % Polyester texturiert, Feinheit 50 dtex f 36 x 2;
Kern-Mantel-Garn in der Kette:
   Feinheit 39 dtex f 6 x 1; mit Filamenten mit einem Kern aus trilobalem Monofil-Carbon-Filament und einem Mantel aus Polyester;
Kern-Mantel-Garn im Schuss:
   Feinheit 39 dtex f 6 x 1; mit Filamenten mit einem Kern aus trilobalem Monofil-Carbon-Filament und einem Mantel aus Polyester;
Gewebebindung: X Köper 2/2;
Kettfadendichte: 230 Kettfäden/dm, wobei für jeden 44.
Kettfaden das Kern-Mantel-Garn eingesetzt ist; dies ergibt einen Abstand zwischen zwei benachbarten Kern-Mantel-Garnen in Kettrichtung von 16 mm;
Schussfadendichte: 155 Schussfäden/dm, wobei für jeden 24. Schussfaden das Kern-Mantel-Garn eingesetzt ist; dies ergibt einen Abstand zwischen zwei benachbarten Kern-Mantel-Garnen in Schussrichtung von 16 mm;

Diese flächige Textilie weist bedingt durch die Abstände der Kern-Mantel-Garne mit leitfähigen Carbon-Monofilamenten in Kett- und Schussrichtung von jeweils 16 mm als Messwert einen Abschirmfaktor nach EN 1149-3 von S = 0, 36 auf. Der zusätzlich nach EN 1149-1. 2006 gemessene Oberflächenwiderstand als weiterer Wert für die Bewertung der antistatischen Wirksamkeit liegt bei 1 x 10¹² Ohm.

Das Gewebe wird mit einer Klebstoff-Pastenpunktbeschichtung von 52 Punkten/cm² und Beschichtungsauflage von 18g/m² beschichtet, wobei der Klebstoff aus COPES besteht.

Es erfolgt eine Kaschierung mit einer Polyestermembran mit einem Flächengewicht von 18 g/m².

Das so hergestellte erfindungsgemäße textile Flächengebilde weist einen Abschirmfaktor S von 0,61 auf. Der Oberflächenwiderstand liegt bei 7 x 10¹⁰ Ohm und der Halbwertzeitfaktor t₅₀ bei 0,01 s.

Der Vergleich der Messwerte zeigt deutlich, dass die antistatische Wirksamkeit des erfindungsgemäßen textilen Flächengebildes höher ist als bei der flächigen Textilie, was aus der Kombination mit der Doppelpunktbeschichtung und der Polyestermembran resultiert.

### Beispiel 2

Es wird als flächige Textilie ein Kettengewirke mit Schussfadeneintrag mit folgenden Parametern hergestellt:
Kettfaden: Filmamentgarn aus 100 % Polyamid texturiert, Feinheit 11 dtex f 7;
Schussfaden:Filamentgarn aus 100 % Polyamid texturiert, Feinheit 11 dtex f 7;
Kern-Mantel-Garn in der Kette:
   Feinheit 39 dtex f 6 x 1 mit Filamenten mit einem Kern aus trilobalem Monofil-Carbon-Filament und einem Mantel aus Polyamid;
Kern-Mantel-Garn im Schuss:
   Feinheit 39 dtex f 6 x 1 mit Filamenten mit einem Kern aus trilobalem Monofil-Carbon-Filament und einem Mantel aus Polyamid;

Dieses Kettengewirke hat eine Feinheit von 32 Gg (32 Fäden auf 1 inch). Jeder 30. Kettfaden und jede 55. Maschenreihe ist mit dem Kern-Mantel-Garn belegt. Die Schussfadendichte ist 340 Schussfäden/dm, die Masse je Flächeneinheit des Kettengewirkes beträgt 20 g/m².

Die so hergestellte flächige Textile weist bedingt durch die Abstände der Kern-Mantel-Garne in Kett- und Schussrichtung von jeweils 16 cm als Messwert einen Abschirmfaktor nach EN 1149-3 von S = 0,32 auf. Der Halbwertzeitfaktor t₅₀ beträgt 0,01 s und der Oberflächenwiderstand 1 x 10¹² Ohm.

Diese flächige Textilie wird gemäß Beispiel 1 punktuell mit Klebstoff versehen und mit einer PTFE-Membran kaschiert. Danach weist das textile Flächengebilde einen Abschirmfaktor von S = 0,59 auf. Der Oberflächenwiderstand beträgt 7 x 10¹⁰ Ohm.

Auch dieses Beispiel zeigt, dass durch die Kaschierung der Abschirmfaktor und Oberflächenwiderstand beachtlich verbessert werden, wodurch auch insbesondere die Einwirkung auf Milbenallergene beträchtlich reduziert werden kann. Offenbar wird die Ableitfähigkeit für elektrische Ladungen dadurch begünstigt, dass sowohl das Membranfolienmaterial als auch das Material des Klebstoffs aus der Luftfeuchtigkeit oder aus Körperausdünstungen Wassermoleküle und/oder OH-Gruppen aufnehmen, so dass die Leitfähigkeit des Systems erhöht wird.

Zudem wird durch die Membranfolie das Durchdringen von Allergenen und Hautschuppen vermieden, so dass das erfindungsgemäße textile Flächengebilde insbesondere für Schutzbezüge für Kissen, Oberbetten und Matratzen geeignet ist. Schlafstörungen werden durch die verbesserte elektrostatische Ableitung ebenso vermieden wie Beeinträchtigungen durch Milben. Dadurch dass die Membranfolie lediglich punktuell mit Klebstoffpunkten angeklebt ist, verbleiben für den gewünschten Wasserdampfdurchtritt ausreichend große freie Flächenbereiche von z. B. > 90 % der Folie.

Wesentlich ist, dass das erfindungsgemäße textile Flächengebilde nicht geerdet verwendbar ist und dabei die hervorragenden beschriebenen Eigenschaften aufweist.

Im Rahmen der Erfindung werden insbesondere Garnstärken bzw. Garnfeinheiten der elektrisch leitenden Garne verarbeitet, die den Garnstärken bzw. Garnfeinheiten entsprechen, aus denen das kombinierte Flächengebilde hergestellt ist. Dazu werden z.B. sechs Filamenten aus elektrisch leitendem Garn umwunden mit einem Umwindungsgarn aus nicht leitendem Material, z.B. aus Polyester.

Grundsätzlich sind die Einzelfilamente der elektrisch leitenden Garne wegen ihrer Feinheit auf üblicherweise verwendeten Web- und Wirkmaschinen nicht ohne weiteres verarbeitbar. Aus diesem Grund werden je nach Anwendungsfall mehrere Filamente zusammengefaßt und mit mindestens einem die Festigkeit der Filamentschar erhöhenden Umwindungsgarn aus nicht leitendem Material, z.B. Polyester, umwunden.

## Patentansprüche

1. Textiles Flächengebilde für Bettsysteme, wie Schutzbezüge, Kissen, Oberbetten oder Matratzen aufweisend eine flächige Textilie, in die sich kreuzende, elektrisch leitende Garne mit bestimmten Abständen angeordnet sind,
**dadurch gekennzeichnet,**
**dass** auf die flächige Textilie eine wasser- und luftundurchlässige, wasserdampfdurchlässige Membranfolie punktuell mit Klebstoffpunkten aufgeklebt ist.

2. Flächengebilde nach Anspruch 1,
**dadurch gekennzeichnet**
**dass** die flächige Textilie ein Gewebe, Gewirke mit Schusseintrag, Gestrick oder Vlies mit Flächengewichten zwischen 10 und 500, insbesondere zwischen 30 und 100 g/m² ist.

3. Flächengebilde nach Anspruch 1 und/oder 2,
**dadurch gekennzeichnet,**
**dass** die flächige Textilie aus Baumwolle, Viscose, Polyesterfilament- oder Polyamidgarnen oder Polyester- oder Polyamidfasern oder deren Mischungen mit Feinheiten zwischen und 11 dtex und 1100 dtex, insbesondere zwischen 33 und 167 dtex besteht.

4. Flächengebilde nach Anspruch 2 und/oder 3,
**dadurch gekennzeichnet,**
**dass** die flächige Textilie ein Gewebe oder Kettengewirke mit Schusseintrag ist.

5. Flächengebilde nach einem oder mehreren der Ansprüche 1 bis 4,
**dadurch gekennzeichnet,**
**dass** die leitfähigen Garne Feinheiten zwischen 11 und 1100 dtex, insbesondere zwischen 39 und 156 dtex aufweisen.

6. Flächengebilde nach Anspruch 5,
**dadurch gekennzeichnet,**
**dass** die leitenden Garne als Filamentgarne mit vorzugsweise mit mindestens einem Umwindüngsgarn aus elektrisch nicht leitendem Material umwundenen Filamenten aus einem Kern aus einem mindestens bilobalen insbesondere trilobalen Monofil-Carbon-Filament und einer Ummantelung aus Kunststoff wie Polyamid- öder Polyester ausgebildet sind.

7. Flächengebilde nach Anspruch 5 und/oder 6,
**dadurch gekennzeichnet,**
**dass** die pa.rallel verlaufenden leitfähigen Garne Abstände voneinander zwischen 4 und 100, insbesondere zwischen 6 und 35 mm aufweisen.

8. Flächengebilde nach einem oder mehreren der Ansprüche 1 bis 7,
**dadurch gekennzeichnet,**
**dass** die Klebstoffpunkte einen Durchmesser zwischen 0,15 und 10 mm aufweisen und ein Flächengewicht von 3 bis 100 g/m², insbesondere von 6 bis 18 g/m² aufweisen und insbesondere aus Polyester oder Polyamid oder Polyurethan oder Mischungen daraus bestehen.

9. Flächengebilde nach einem oder mehreren der Ansprüche 1 bis 8,
**dadurch gekennzeichnet,**
**dass** die Membrane aus PTFE oder PET oder PU besteht und ein Flächengewicht zwischen 5 und 200, insbesondere zwischen 15 und 50 g/m² aufweist.

10. Flächengebilde nach einem oder mehreren der Ansprüche 1 bis 9,
**dadurch gekennzeichnet,**
**dass** es nicht geerdet einen elektrischen Abschirmfaktor S gemessen nach EN 1149-3 zwischen 0,39 und 0,75, sowie Halbwertzeitfaktoren kleiner 4 s aufweist.

11. Flächengebilde nach einem oder mehreren der Ansprüche 1 bis 10,
**dadurch gekennzeichnet,**
**dass** es einen elektrischen Widerstand gemessen nach EN 1149-1 2006 über 2,5 x 10⁹ Ohm, insbesondere zwischen 5 x 10¹⁰ und 1 x 10¹² Ohm und vorzugsweise Halbwertzeitfaktoren kleiner 0,1 s aufweist.

12. Schutzbezug für Bettsysteme, insbesondere in Form eines Kissen-, Oberbett- oder Matratzenbezugs ohne Erdungselemente,
**dadurch gekennzeichnet,**
**dass** der Schutzbezug im Wesentlichen aus einem textilen Flächengebilde nach einem oder mehreren der Ansprüche 1 bis 11 hergestellt ist.

## Claims

1. Textile fabric for bedding systems, such as protective coverings, pillows, duvets or mattresses, with a flat textile in which intersecting electrically conductive yarns are arranged at specific intervals,
**characterised in that**
a waterproof and airtight membrane film, permeable to water vapour, is bonded to the flat textile by adhesive spots at selected points.

2. Fabric according to claim 1,
**characterised in that**
the flat textile is a a woven fabric, knitted fabric, e.g. knitted fabric with weft insert, knitted fabric or non-woven fabric with weights per unit area of 10 to 500, in particular from 30 to 100 g/m²_{.}

3. Fabric according to claim 1 and/or 2,
**characterised in that**
the flat textile is made of cotton, viscose, polyester filament or polyamide yarns or polyester or polyamide fibres or their blends with counts between 11 dtex and 1100 detx, in particular between 33 and 167 dtex.

4. Fabric according to claim 2 and/or 3,
**characterised in that**
the flat textile is a woven fabric or warp knit fabric with weft insert.

5. Fabric according to one or more of claims 1 to 4,
**characterised in that**
the conductive yarns have counts between 11 and 1100 dtex, in particular between 39 and 156 dtex.

6. Fabric according to claim 5,
**characterised in that**
the conductive yarns are in the form of filament yarns with filaments, preferably covered by at least one covering yarn of electrically non-conductive material, of a core of a carbon monofilament which is at least bilobal, in particular trilobal, and a sheathing of plastic such as polyamide or polyester.

7. Fabric according to claim 5 and/or 6,
**characterised in that**
the parallel conductive yarns are spaced apart by between 4 and 100, in particular between 6 and 35 mm.

8. Fabric according to one or more of claims 1 to 7,
**characterised in that**
the adhesive spots have a diameter between 0.15 and 10 mm and a weight per unit area of 3 to 100 g/m², in particular from 6 to 18 g/m², and are made in particular of polyester or polyamide or polyurethane or mixtures thereof.

9. Fabric according to one or more of claims 1 to 8,
**characterised in that**
the membrane is made of PTFE or PET or PU and has a weight per unit area of between 5 and 200, in particular between 15 and 50 g/m².

10. Fabric according to one or more of claims 1 to 9,
**characterised in that**
it is not earthed and has an electrical shielding factor S measured according to EN 1149-3 of between 0.39 and 0.75, and half-life factors less than 4 s.

11. Fabric according to one or more of claims 1 to 10,
**characterised in that**
it has an electrical resistance measured in accordance with EN 1149-1 2006 of 2.5 x 10⁹ ohm, in particular between 5 x 10¹⁰ and 1 x 10¹⁰ ohm, and preferably half-life factors below 0.1 s.

12. Protective cover for bedding systems, in particular in the form of a pillows, duvet or mattress cover, without earthing elements,
**characterised in that**
the protective cover is substantially made from a textile fabric according to one or more of claims 1 to 11.

## Revendications

1. Structure surfacique textile pour systèmes de literie, tels que housses protectrices, coussins, couettes ou matelas comprenant un textile surfacique dans lequel des fils électriquement conducteurs croisés sont agencés à des distances déterminées,
**caractérisée en ce qu'**une feuille-membrane imperméable à l'eau et à l'air mais perméable à la vapeur d'eau et collée sur le textile surfacique de manière ponctuelle avec des points de colle.

2. Structure surfacique selon la revendication 1,
**caractérisée en ce que** le textile surfacique est un tissu, un tricot avec trame insérée, un produit tricoté ou un non-tissé avec des poids surfaciques entre 10 et 500, en particulier entre 30 et 100 g/m².

3. Structure surfacique selon la revendication 1 et/ou 2,
**caractérisée en ce que** le textile surfacique est en coton, viscose, filaments de polyester ou fils en polyamide ou fibres de polyester ou de polyamide, ou leurs mélanges avec des finesses entre 11 dtex et 1100 dtex, en particulier entre 33 et 167 dtex.

4. Structure surfacique selon la revendication 2 et/ou 3,
**caractérisée en ce que** le textile surfacique est un tissu ou un tricot sur chaîne avec trame insérée.

5. Structure surfacique selon l'une ou plusieurs des revendications 1 à 4,
**caractérisée en ce que** les fils conducteurs ont des finesses entre 11 et 1100 dtex, en particulier entre 39 et 156 dtex.

6. Structure surfacique selon la revendication 5,
**caractérisée en ce que** les fils conducteurs sont réalisés comme des fils à filaments avec des filaments enlacés de préférence avec au moins un fil enlacé en un matériau non conducteur de l'électricité, composé d'un noyau formé d'un filament en carbone à monofil présentant au moins deux lobes et en particulier trois lobes, et un enrobage en matière plastique comme du polyamide ou du polyester.

7. Structure surfacique selon la revendication 5 et/ou 6,
**caractérisée en ce que** les fils conducteurs qui s'étendent parallèlement présentent des distances les uns par rapport aux autres entre 4 et 100, en particulier entre 6 et 35 mm.

8. Structure surfacique selon l'une ou plusieurs des revendications 1 à 7,
**caractérisée en ce que** les points de colle ont un diamètre entre 0,15 et 10 mm, et un poids surfacique de 3 à 100 g/m², en particulier de 6 à 18 g/m², et sont en particulier en polyester ou en polyamide ou en polyuréthane, ou encore des mélanges de ceux-ci.

9. Structure surfacique selon l'une ou plusieurs des revendications 1 à 8,
**caractérisée en ce que** la membrane est en PTFE ou PET ou PU, et présente un poids surfacique entre 5 et 200, en particulier entre 15 et 50 g/m²_{.}

10. Structure surfacique selon l'une ou plusieurs des revendications 1 à 9,
**caractérisée en ce qu'**en absence de mise à la terre, elle présente un facteur de blindage électrique S entre 0,39 et 0,75, mesuré d'après la norme EN 1149-3, ainsi que des périodes de demi-vie inférieures à 4s.

11. Structure surfacique selon l'une ou plusieurs des revendications 1 à 10,
**caractérisée en ce qu'**elle présente une résistance électrique supérieure à 2,5 x 10⁹ ohms, mesurée d'après la norme EN 1149-1 2006, en particulier entre 5 x 10¹⁰ et 1 x 10¹² ohms, et de préférence des périodes de demi-vie inférieures à 0,1 s.

12. Housse protectrice pour des systèmes de literie, en particulier sous la forme d'une housse de coussin, une housse de couette ou une housse de matelas sans éléments de mise à la terre,
**caractérisée en ce que** la housse protectrice est fabriquée à partir d'une structure surfacique textile selon l'une ou plusieurs des revendications 1 à 11.
